# EUROPÄISCHE PATENTSCHRIFT

(11) **EP 2 543 245 B1**
(45) Veröffentlichungstag und Bekanntmachung des Hinweises auf die Patenterteilung: **17.12.2014**
(21) Anmeldenummer: 12004068.8
(22) Anmeldetag: 25.05.2012
(51) Int. Cl.: A01G 9/22

(54) **Schirmvorrichtung für ein Gewächshaus**
Screen device for a greenhouse
Dispositif d'écran pour une serre

(30) Priorität: 06.07.2011 DE 202011103187 U
(43) Veröffentlichungstag der Anmeldung: 09.01.2013
(73) Patentinhaber: Novavert GmbH & Co. KG, 48268 Greven (DE)
(72) Erfinder: Heescher, Niclas, 48369 Saerbeck (DE)
(74) Vertreter: Deters, Frank

(56) Entgegenhaltungen:
- EP-A1- 0 330 086
- EP-A1- 2 036 428
- DE-A1- 3 206 244
- DE-A1-102006 047 345
- DE-A1-102006 048 461
- DE-U1- 9 417 855

## Beschreibung

Die Erfindung betrifft eine Schirmvorrichtung für ein Gewächshaus nach dem Oberbegriff des Anspruchs 1.

Derartige Schirmvorrichtungen sind bekannt, wie z.B. aus DE 10 2006 048 461 A1 oder DE 3206244 A1. Wird eine Schirmvorrichtung in ein Gewächshaus eingebaut, so werden bauseits Tragedrähte an einem Gestell unterhalb oder auch oberhalb des Daches gespannt. Die Dimensionierung des an den Tragedrähten aufzuhängenden Schirms sowie der Abstand der Tragedrähte wird dem Schirmhersteller mitgeteilt, der anschließend den Schirm konfektioniert und bereits Haken als Halterungen in den Schirm einsticht, an denen später der Schirm an den Tragedrähten aufgehängt wird. In der Praxis kann es jedoch vorkommen, dass der Abstand der Tragedrähte zueinander nicht gleichbleibend ist, so dass ein oder mehrere einem Tragedraht zugeordnete Haken an dem Schirm nicht unmittelbar senkrecht unterhalb des Tragedrahtes hängen, sondern schräg zu diesem positioniert sind. Hierdurch wird das Schirmmaterial strapaziert, da dieses ungleichmäßig stark gespannt wird. Auch kann es vorkommen, dass der Haken nicht mehr am Tragedraht einhängbar ist, wenn der Abstand zwischen beiden zu groß ist.

Der Erfindung liegt die Aufgabe zugrunde, eine Schirmvorrichtung der vorgenannten Art bereitzustellen, bei der die vorgenannten Probleme verringert sind.

Die Erfindung löst diese Aufgabe durch eine Schirmvorrichtung der eingangs genannten Art mit den zusätzlichen Merkmalen des kennzeichnenden Teils des Anspruchs 1. Weitere vorteilhafte Ausgestaltungen der Erfindung sind den Unteransprüchen 2 bis 11 zu entnehmen.

Erfindungsgemäß sind zwischen den Halterungen und den Tragedrähten Positionierhilfen als separate Bauteile angeordnet. Die Positionierhilfen sind dabei jeweils an den Tragedrähten in deren Längserstreckung verschiebbar aufgehängt. Die Positionierhilfen können somit entlang des ihnen zugeordneten Tragedrahtes in dessen Längserstreckung gleiten. Die Positionierhilfen sind dabei eine Relativbewegung zwischen den Halterungen und den Positionierhilfen in Richtung auf einen benachbarten Tragedraht zu und/oder von diesem weg zulassend jedoch in vertikaler Richtung verhindernd mit den Halterungen verbunden. Hierdurch erfolgt eine Entkoppelung zwischen Tragedraht und Schirm in Richtung quer zur Längserstreckung der Tragedrähte und auf einen benachbarten Tragedraht zu oder von diesem weg. Die Positionierhilfe kann in Richtung quer zur Längserstreckung der Tragedrähte und auf einen benachbarten Tragedraht zu oder von diesem weg in mehr als einer Lage mit der Halterung verbunden werden. Gleichzeitig bleibt dabei der Abstand der Positionierhilfe zur Halterung in vertikaler Richtung unverändert. Etwaige Fehlstellungen zwischen einer am Schirm angebrachten Halterung und der Positionierung der Tragedrähte egalisieren sich hierdurch in Richtung von einem Tragedraht auf einen anderen Tragedraht zu. Abweichungen des Abstandes der Tragedrähte zueinander oder auch Ungenauigkeiten in der Festlegung der Halterungen an den Schirmen können hierdurch ausgeglichen werden, so dass Spannungen innerhalb des Schirmmaterials verhindert werden können und auch eine gänzliche Neupositionierung einer Halterung am Schirm unterbleiben kann.

In einer besonders bevorzugten Ausgestaltung der Erfindung weisen zumindest einige der Halterungen wenigstens eine Schiene, die quer zur Längserstreckung der Tragedrähte verläuft, und zumindest eine der Positionierhilfen ist entlang der Schiene verschiebbar ausgebildet. Durch das Vorsehen der Schienen unterliegt die Positionierung der Halterung relativ zur Positionierhilfe keiner Rasterung. Während des Verfahrens des Schirmes entlang der Tragedrähte, gleiten die Positionierhilfen auf den Tragedrähten. Falls der Abstand zwischen zwei Tragedrähten ungleichmässig ist, gleitet die Positionierhilfe in der Schiene während des Verfahrens des Schirmes zusätzlich auch quer zur Längserstreckung der Tragedrähte. Spannungen innerhalb des Schirmes treten hierdurch nicht auf.

Besonders bevorzugt weist zumindest eine der Schienen dabei im Querschnitt ein C-Profil auf. Mit Hilfe einer derartigen Schiene kann die Positionierhilfe auf einfache Art und Weise an einem Herausfallen aus der Schiene während eines Verschiebens gehindert werden.

Mit Vorteil greift zumindest eine der Positionierhilfen mit einem Sockel in die Schiene ein, wobei der Sockel in der Schiene verschiebbar ausgebildet ist. Diese Ausgestaltung ermöglicht eine besonders einfache Realisierung der Verschiebbarkeit der Positionierhilfe innerhalb der Schiene.

In einer vorteilhaften Ausgestaltung der Erfindung weist zumindest eine der Schienen im Querschnitt eine Verdickung auf, die wenigstens teilweise von zumindest einer der Positionierhilfen umkragt wird. Die Positionierhilfe umgreift die Verdickung und hindert dadurch die Halterung an einem Herunterfallen. Die Verdickung kann dabei von einer Wulst oder auch einem T-Profil gebildet werden. Durch das Vorsehen einer Verdickung als Schiene kann Schienenmaterial eingespart werden und die Schiene kann zudem schmaler ausgebildet werden, wodurch der Schattenwurf durch die Schiene verringert ist.

Mit Vorteil sind zumindest zwei benachbarte Halterungen, die mittels Positionierhilfen an zueinander benachbarten Tragedrähten aufgehängt sind, über ein Verbindungselement miteinander verbunden. Das Verbindungselement wird bevorzugt von einem Flacheisen oder flachen Aluminiumprofil gebildet. Das Verbindungselement ist dabei besonders bevorzugt jeweils in die Schienen der Halterungen eingeführt und dort festgelegt. Durch das Vorsehen des Verbindungselements kann die Schirmvorrichtung insgesamt zusätzlich auf einfache Art und Weise ergänzend stabilisiert werden. Auch können hierdurch auch zwei benachbarte Halterungen unmittelbat aneinandergelegt und in dieser Lage fixiert werden. Das Einführen des Verbindungselements in die Schiene und die dort vorgesehene Festlegung ist konstruktiv besonders einfach vor Ort durchzuführen und erfordert keine spätere Wartung. Mit Vorteil weist das Verbindungselement beispielsweise eine Bohrung mit einem Innengewinde auf, in die eine Schraube eingelassen ist, die während des Verspannens gegen den Rücken des C-Profils drückt und dadurch das Verbindungselement an die dem Rücken des C-Profils gegenüberliegende Seite der Schiene presst.

In einer vorteilhaften Ausgestaltung der Erfindung ist an zumindest einer der Halterungen mehr als ein Schirm festgelegt. Hierdurch ist es möglich, einer Mischung von mehr als einem Schirm innerhalb einer zusammenhängenden und zusammen längs der Tragedrähte verschiebbaren Beschattungseinheit anzuordnen. Hierdurch ist eine kleinteiligere Einteilung der unterschiedlich stark besonnten oder beschatteten Bereiche unterhalb der Schirmvorrichtung möglich, ohne mehrere einzeln an den Tragedrähten verschiebbare Schirme installieren zu müssen.

In einer vorteilhaften Ausgestaltung der Erfindung ist zumindest ein Schirm mittels einer Klemmverbindung an einer der Halterungen festgelegt. Bevorzugt wird der Schirm dabei auf einem Klemmsitz aufgelegt und mit einer separaten Klammer festgeklemmt. Alternativ oder auch ergänzend hierzu ist in einer weiteren vorteilhaften Ausgestaltung der Erfindung zumindest ein Schirm mittels eines Keders an einer der Halterungen festgelegt. Das Schirmmaterial selbst weist hierzu einen Keder auf, der in einer Kederführungskammer der Halterung zur Festlegung eingespannt wird.

Mit Vorteil ist an zumindest zwei in Längserstreckung der Tragedrähte benachbarten Halterungen wenigstens ein in vertikaler Richtung oberer Schirm und ein unterer Schirm festgelegt, wobei die Breite des oberen Schirms in Längserstreckung der Tragedrähte in dessen gespanntem Zustand kürzer ist als die Länge des unteren Schirms in Längserstreckung der Tragedrähte. Im Querschnitt betrachtet entsteht somit im aufgespannten Zustand der schirme zwischen diesen ein Raum, wobei der unterer Schirm den Raum vergrößernd nach unten hin durchhängt. Der Raum zwischen den Schirmen kann als Isolierung des unter der Schirmvorrichtung befindlichen Gewächshausraumes gegenüber äußeren Temperaturen eingesetzt werden.

Weitere vorteilhafte Ausgestaltungen der Erfindung und Details sind den nachfolgend beschriebenen, schematisch dargestellten Ausführungsbeispielen zu entnehmen; es zeigen:
- Fig. 1: eine erfindungsgemäße Schirmvorrichtung,
- Fig. 2: eine Ausschnittsvergrößerung aus Fig. 1,
- Fig. 3: eine Schnittdarstellung nach der Linie III-III in Fig. 2,
- Fig. 4: eine Detaildarstellung einer erfindungsgemäßen Halterung, zwei Schirme mit Keder festlegend,
- Fig. 5: eine erfindungsgemäße Halterung, einen durchgehenden Schirm über eine Klemmverbindung festlegend,
- Fig. 6: eine weitere erfindungsgemäße Halterung, einen Schirm über eine Klemmverbindung festlegend,
- Fig. 7: eine erfindungsgemäße Halterung, zwei Schirme über jeweils Klemmverbindungen festlegend und
- Fig. 8: eine weitere erfindungsgemäße Halterung, einen durchgehenden Schirm mittels eines Keders festlegend.

Nachfolgend werden gleichwirkende Elemente der Erfindung mit einer einheitlichen Bezugsziffer versehen, sofern dies sinnvoll ist. Die nachfolgend beschriebenen Merkmalskombinationen können auch in weiteren Kombinationen als beschrieben oder dargestellt und unter Weglassung einzelner Merkmale Gegenstand der Erfindung sein.

### Bezugsziffern

| | | | |
|---|---|---|---|
| 2 | Schirmvorrichtung | 26 | Schiene |
| 4 | Tragedrähte | 28 | Sockel |
| 6 | Längserstreckung | 30 | Verbindungselement |
| 8 | Schirm | 32 | Schraube |
| 10 | Gestänge | 34 | Schraubenende |
| 12 | Führungsrohr | 36 | Rücken des C-Profils |
| 14 | Transportseil | 38 | Keder |
| 16 | Antriebswelle | 40 | Kederführungskammer |
| 18 | Antrieb | 42 | Klemmsitz |
| 20 | Halterungen | 44 | Klammer |
| 22 | Positionierhilfe | | |
| 24 | Doppelpfeil in Richtung auf benachbarten Tragedraht und/oder von diesem weg | | |

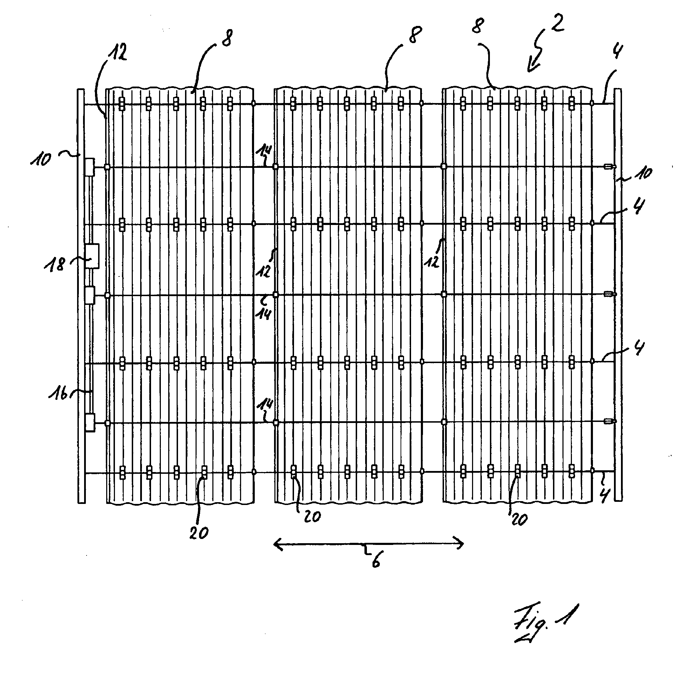

Fig. 1 zeigt eine erfindungsgemäße Schirmvorrichtung 2 mit einer Mehrzahl parallel angeordneter Tragedrähte 4 an denen drei in Längserstreckung, dargestellt durch Doppelpfeil 6, der Tragedrähte 4 verschiebbare Schirme 8 zur Beschattung aufgehängt sind. Im Ausführungsbeispiel sind die Tragedrähte 4 an einem Gestänge 10 fixiert. Jeder der Schirme 8 ist mit einem ihm zugeordneten Führungsrohr 12 verbunden, an dem Transportseile 14 eingreifen. Die Transportseile 14 wiederum sind mit einer Antriebswelle 16 verbunden, die über einen Antrieb 18 in Rotation versetzt werden kann und dadurch die Transportseile 14 und die daran fixierten Führungsrohre 12 sowie die Schirme 8 in Längserstreckung 6 der Tragedrähte 4 bewegt. Hierdurch ist ein Zusammenfalten oder ein Ausziehen der Schirme 8 und damit eine Verbringung der Schirme 8 von einer zusammengefalteten, nicht beschattenden Position, in eine ausgezogene, das Gewächshaus beschattende Position verbringbar. Zur Aufhängung der Schirme 8 sind zwischen den Schirmen 8 und den Tragedrähten 4 Halterungen 20 angeordnet, die in Längserstreckung 6 der Tragedrähte fest mit den Schirmen 8 verbunden sind.

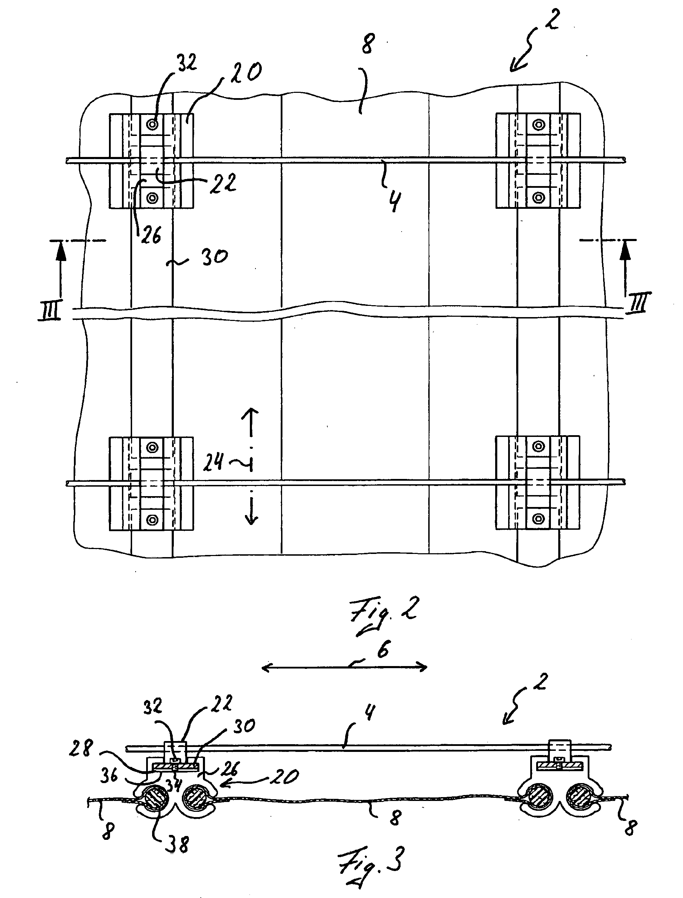

Fig. 2 und Fig. 3 zeigen jeweils Ausschnittsvergrößerungen aus Fig. 1. Zwischen den Halterungen 20 und den Tragedrähten 4 sind jeweils Positionierhilfen 22 als separate Bauteile angeordnet. Die Positionierhilfen 22 sind jeweils an den Tragedrähten 4 in deren Längserstreckung 6 verschiebbar aufgehängt. Zudem sind die Positionierhilfen 22 dergestalt mit den Halterungen 20 verbunden, dass eine Relativbewegung zwischen den Halterungen 20 und den Positionierhilfen (22) in Richtung auf einen benachbarten Tragedraht 4 zu und /oder von diesem weg, dargestellt durch Doppelpfeil 24, möglich ist, in vertikaler Richtung jedoch verhindert wird.

Im Ausführungsbeispiel umfassen die Halterungen 20 hierzu quer zur Längserstreckung 6 verlaufende Schienen 26 und die Positionierhilfen 22 sind entlang der Schienen 26 verschiebbar ausgebildet. Die Schienen 26 weisen dabei im Ausführungsbeispiel im Querschnitt ein C-Profil auf. Die Positionierhilfen 22 greifen mit Sockeln 28 in die Schienen 26 ein, wobei die Sockel 28 in den Schienen 26 verschiebbar ausgebildet sind. Im Ausführungsbeispiel dargestellt in Fig. 2 und Fig. 3 nehmen die Sockel 28 den vollständigen Hohlraum der als C-Profil ausgebildeten Schienen 26 ein.

Benachbarte Halterungen 20, die mittels Positionierhilfen 22 an zueinander benachbarten Tragedrähten 4 aufgehängt sind, sind jeweils über ein Verbindungselement 30 miteinander verbunden. Die Verbindungselemente 30 sind hierzu jeweils in die Schienen 26 der Halterungen 20 eingeführt und dort festgelegt. Zur Festlegung wird im Ausführungsbeispiel eine Schraube 32 durch ein Innengewinde des Verbindungselements 30 gedreht, wobei das Schraubenende 34 gegen den Rücken 36 des C-Profils der Schiene 26 drückt und durch Drehung der Schraube 32 der Abstand zwischen Rücken 36 des C-Profils und dem Verbindungselement 30 vergrößert wird, bis das Verbindungselement 30 an die dem Rücken 36 des C-Profils gegenüberliegende Seite der Schiene 26 gepresst und dadurch mit der Schiene 26 verbunden wird.

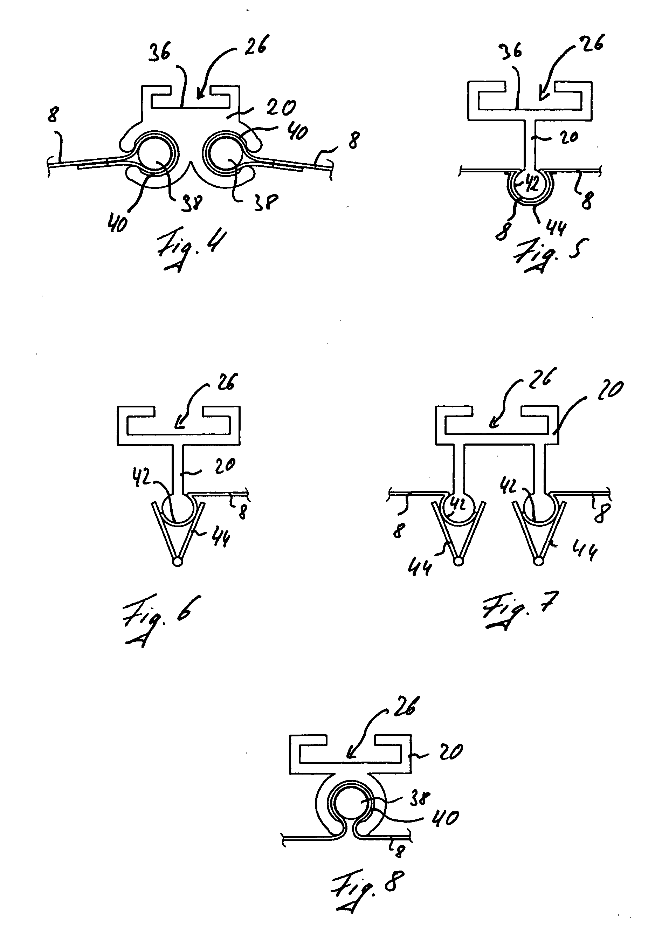

Fig. 4 bis Fig. 8 zeigen unterschiedliche Varianten der erfindungsgemäßen Halterung 20 mit verschiedenen Optionen des Festlegens eines oder mehrerer Schirme 8 an oder in der Halterung 20. In Fig. 4 bis 8 ist zudem gut die Ausgestaltung der Schiene 26 in den jeweiligen Halterungen 20 als ein C-Profil zu sehen.

In Fig. 4 und Fig. 8 sind die Schirme 8 mittels eines Keders 38 an der jeweiligen Halterung 20 festgelegt. Der Keder 38 ist hierzu in einer Kederführungskammer 40 der Halterung 20 eingeführt. In Fig. 4 sind in einer Halterung 20 zwei Schirme 8 festgelegt. In Fig. 8 ist lediglich ein Schirm 8 festgelegt.

In Fig. 5 bis Fig. 7 erfolgt eine Festlegung des oder der Schirme 8 mittels Klemmverbindung an den jeweiligen Halterungen 20. Hierzu wird der Schirm 8 auf einem Klemmsitz 42 der Halterung 20 aufgelegt und mit einer unter Spannung stehenden Klammer 44 festgelegt. In Fig. 5 und Fig. 6 ist jeweils nur ein Schirm 8 an der Halterung 20 festgelegt und in Fig. 7 sind zwei verschiedene Schirme 8 an einer Halterung 20 fixiert.

## Patentansprüche

1. Schirmvorrichtung für ein Gewächshaus (2) umfassend eine Mehrzahl parallel angeordneter, gespannter Tragedrähte (4) an denen zumindest ein in Längserstreckung (6) der Tragedrähte (4) verschiebbarer Schirm (8) zur Beschattung aufgehängt ist, wobei zur Aufhängung Halterungen (20) zwischen dem Schirm (8) und den Tragedrähten (4) angeordnet sind, die in Längserstreckung der Tragedrähte fest mit dem Schirm (8) verbunden sind, **dadurch gekennzeichnet, dass** zwischen den Halterungen (20) und den Tragedrähten (4) Positionierhilfen (22) als separate Bauteile angeordnet sind, die jeweils an den Tragedrähten (4) in deren Längserstreckung (6) verschiebbar aufgehängt sind und die eine Relativbewegung zwischen den Halterungen (20) und den Positionierhilfen (22) in Richtung auf einen benachbarten Tragedraht (4) zu und/oder von diesem weg zulassend und in vertikaler Richtung verhindernd mit den Halterungen (20) verbunden sind.

2. Schirmvorrichtung (2) nach Anspruch 1, **dadurch gekennzeichnet, dass** zumindest einige der Halterungen (20) jeweils wenigstens eine Schiene (26) aufweisen, die quer zur Längserstreckung (6) der Tragedrähte (4) verläuft, und die Positionierhilfen (22) entlang der Schienen (26) verschiebbar ausgebildet sind.

3. Schirmvorrichtung (2) nach Anspruch 2, **dadurch gekennzeichnet, dass** zumindest eine der Schienen (26) im Querschnitt ein C-Profil aufweist.

4. Schirmvorrichtung (2) nach einem der Ansprüche 2 oder 3, **dadurch gekennzeichnet, dass** zumindest eine der Positionierhilfen (22) mit einem Sockel (28) in eine der Schienen (26) eingreift, wobei der Sockel (28) in der Schiene (26) verschiebbar ausgebildet ist.

5. Schirmvorrichtung (2) nach einem der Ansprüche 2 bis 4, **dadurch gekennzeichnet, dass** zumindest eine der Schienen (26) im Querschnitt eine Verdickung aufweist, die wenigstens teilweise von zumindest einer der Positionierhilfen (22) umkragt wird.

6. Schirmvorrichtung (2) nach einem der vorhergehenden Ansprüche, **dadurch gekennzeichnet, dass** zumindest zwei benachbarte Halterungen (20), die mittels Positionierhilfen (22) an zueinander benachbarten Tragedrähten (4) aufgehängt sind, über ein Verbindungselement (30) miteinander verbunden sind.

7. Schirmvorrichtung (2) nach Anspruch 6, **dadurch gekennzeichnet, dass** das Verbindungselement (30) jeweils in die Schienen (26) der Halterungen (20) eingeführt und dort festgelegt ist.

8. Schirmvorrichtung (2) nach einem der vorhergehenden Ansprüche, **dadurch gekennzeichnet, dass** an zumindest einer Halterung (20) mehr als ein Schirm (8) festgelegt ist.

9. Schirmvorrichtung (2) nach einem der vorhergehenden Ansprüche, **dadurch gekennzeichnet, dass** zumindest ein Schirm (8) mittels Klemmverbindung (42,44) an einer der Halterungen (20) festgelegt ist.

10. Schirmvorrichtung (2) nach einem der vorhergehenden Ansprüche, **dadurch gekennzeichnet, dass** zumindest ein Schirm (8) mittels eines Keders (38) an einer der Halterungen (20) festgelegt ist.

11. Schirmvorrichtung (2) nach einem der vorhergehenden Ansprüche, **dadurch gekennzeichnet, dass** an zumindest zwei in Längserstreckung (6) der Tragedrähte (4) benachbarten Halterungen (20) wenigstens ein in vertikaler Richtung oberer Schirm und ein unterer Schirm festgelegt ist, wobei die Breite des oberen Schirms in Längserstreckung (6) der Tragedrähte (4) in dessen gespanntem Zustand kürzer ist als die Länge des unteren Schirms in Längserstreckung (6) der Tragedrähte (4).

## Claims

1. Screen device for a greenhouse (2), comprising a plurality of parallel, tensioned carrier wires (4) on which is suspended at least one screen (8) which is displaceable in the longitudinal extension (6) of the carrier wires (4) for the purpose of shading, mountings (20) being arranged, for the purpose of suspension, between the screen (8) and the carrier wires (4), which mountings are rigidly connected to the screen (8) in the longitudinal extension of the carrier wires, **characterised in that** positioning aids (22) are arranged as separate components between the mountings (20) and the carrier wires (4), which positioning aids are each suspended on the carrier wires (4) such as to be displaceable in the longitudinal extension (6) thereof and are connected to the mountings (20) such as to allow relative movement between the mountings (20) and the positioning aids (22) towards an adjacent carrier wire (4) and/or away therefrom and such as to prevent relative movement in the vertical direction.

2. Screen device (2) according to claim 1, **characterised in that** at least some of the mountings (20) each have at least a rail (26) which extends transversely to the longitudinal extension (6) of the carrier wires (4), and the positioning aids (22) are formed so as to be displaceable along the rails (26).

3. Screen device (2) according to claim 2, **characterised in that** at least one of the rails (26) has a C-profile in cross section.

4. Screen device (2) according to either claim 2 or claim 3, **characterised in that** at least one of the positioning aids (22) engages in one of the rails (26) by means of a support (28), the support (28) being formed so as to be displaceable in the rail (26).

5. Screen device (2) according to any of claims 2 to 4, **characterised in that**, in cross section, at least one of the rails (26) has a thickened portion which is surrounded at least in part by at least one of the positioning aids (22).

6. Screen device (2) according to any of the preceding claims, **characterised in that** at least two adjacent mountings (20), which are suspended on carrier wires (4) which are adjacent to each other by means of positioning aids (22), are interconnected by means of a connection element (30).

7. Screen device (2) according to claim 6, **characterised in that** the connection element (30) is inserted in each case into the rails (26) of the mountings (20) and fixed here.

8. Screen device (2) according to any of the preceding claims, **characterised in that** more than one screen (8) is fixed to at least one mounting (20).

9. Screen device (2) according to any of the preceding claims, **characterised in that** at least one screen (8) is fixed to one of the mountings (20) by means of a clamp connection (42, 44).

10. Screen device (2) according to any of the preceding claims, **characterised in that** at least one screen (8) is fixed to one of the mountings (20) by means of a beading (38).

11. Screen device (2) according to any of the preceding claims, **characterised in that** at least one upper and one lower screen, in the vertical direction, is fixed to at least two mountings (20) which are adjacent in the longitudinal extension (6) of the carrier wires (4), the width of the upper screen being shorter in the longitudinal extension (6) of the carrier wires (4), when said carrier wires are tensioned, than the length of the lower screen in the longitudinal extension (6) of the carrier wires (4).

## Revendications

1. Dispositif d'écran pour une serre (2) comprenant une pluralité de fils porteurs (4) tendus, disposés parallèlement, sur lesquels est suspendu au moins un écran (8) coulissant dans l'étendue longitudinale (6) des fils porteurs (4) à des fins d'ombrage, des supports (20) étant disposés pour la suspension entre l'écran (8) et les fils porteurs (4), lesquels sont fixement reliés dans l'étendue longitudinale des fils porteurs à l'écran (8), **caractérisé en ce que** des aides au positionnement (22) sont disposées comme des composants séparés entre les supports (20) et les fils porteurs (4), lesquelles sont suspendues respectivement de manière coulissante aux fils porteurs (4) dans leur étendue longitudinale (6) et sont reliées aux supports (20) en permettant un mouvement relatif entre les supports (20) et les aides au positionnement (22) en direction d'un fil porteur (4) contigu et loin de celui-ci et l'empêchant en direction verticale.

2. Dispositif d'écran (2) selon la revendication 1, **caractérisé en ce qu'**au moins quelques-uns des supports (20) présentent respectivement au moins un rail (26) qui s'étend transversalement à l'étendue longitudinale (6) des fils porteurs (4) et les aides au positionnement (22) sont réalisées de manière coulissante le long des rails (26).

3. Dispositif d'écran (2) selon la revendication 2, **caractérisé en ce qu'**au moins l'un des rails (26) présente une section transversale avec un profil en C.

4. Dispositif d'écran (2) selon l'une quelconque des revendications 2 ou 3, **caractérisé en ce qu'**au moins l'une des aides au positionnement (22) s'engage avec un socle (28) dans l'un des rails (26), le socle (28) étant réalisé de manière coulissante dans le rail (26).

5. Dispositif d'écran (2) selon l'une quelconque des revendications 2 à 4, **caractérisé en ce qu'**au moins l'un des rails (26) présente en section transversale un épaississement qui est entouré au moins en partie d'au moins l'une des aides au positionnement (22).

6. Dispositif d'écran (2) selon l'une quelconque des revendications précédentes, **caractérisé en ce qu'**au moins deux supports (20) contigus qui sont suspendus au moyen d'aides au positionnement (22) aux fils porteurs (4) contigus, sont reliés entre eux par un élément de liaison (30).

7. Dispositif d'écran (2) selon la revendication 6, **caractérisé en ce que** l'élément de liaison (30) est respectivement introduit dans les rails (26) des supports (20) et y est fixé.

8. Dispositif d'écran (2) selon l'une quelconque des revendications précédentes, **caractérisé en ce que** plus d'un écran (8) est fixé sur au moins un support (20).

9. Dispositif d'écran (2) selon l'une quelconque des revendications précédentes, **caractérisé en ce qu'**au moins un écran (8) est fixé à l'aide d'une liaison par serrage (42, 44) sur l'un des supports (20).

10. Dispositif d'écran (2) selon l'une quelconque des revendications précédentes, **caractérisé en ce qu'**au moins un écran (8) est fixé à l'aide d'un bourrelet (38) sur l'un des supports (20).

11. Dispositif d'écran (2) selon l'une quelconque des revendications précédentes, **caractérisé en ce qu'**au moins un écran supérieur dans le sens vertical et un écran inférieur sont fixés sur au moins deux supports (20) contigus dans l'étendue longitudinale (6) des fils porteurs (4), la largeur de l'écran supérieur dans l'étendue longitudinale (6) des fils porteurs (4) étant plus courte dans leur état tendu que la longueur de l'écran inférieur dans l'étendue longitudinale (6) des fils porteurs (4).
